# EUROPÄISCHE PATENTSCHRIFT

(11) **EP 1 046 888 B1**
(45) Veröffentlichungstag und Bekanntmachung des Hinweises auf die Patenterteilung: **18.05.2011**
(21) Anmeldenummer: 99120093.2
(22) Anmeldetag: 20.10.1999
(51) Int. Cl.: G01F 23/74, H01H 36/02, H01H 36/00

(54) **Vorrichtung zum Anzeigen und/oder Kontrollieren von Fluiden**
Indicator and/or control device for fluids
Dispositif d'affichage et/ou de contrôle pour des fluides

(30) Priorität: 15.04.1999 DE 19916953
(43) Veröffentlichungstag der Anmeldung: 25.10.2000
(73) Patentinhaber: Hydac Fluidtechnik GmbH, 66273 Sulzbach/Saar (DE)
(72) Erfinder: Hubert, Gernot, Dr., 66386 Sankt Ingbert (DE); Quinot, Martin, 66386 Sankt Ingbert (DE)
(74) Vertreter: Bartels & Partner

(56) Entgegenhaltungen:
- EP-A- 0 372 909
- WO-A-84/04163
- DE-A- 3 241 250
- FR-A- 2 254 016

## Beschreibung

Die Erfindung betrifft eine Vorrichtung zum Anzeigen und/oder Kontrollieren von Fluiden mit mindestens einem Fluidanschluß, der in ein Gehäuse mündet, in dem abhängig vom Fluidniveau ein Schwimmerkörper verfahrbar geführt ist, der eine elektrische Schalteinrichtung ansteuert gemäß der Merkmalsausgestaltung des Oberbegriffes des Anspruches 1.

Dahingehende Vorrichtungen, wie sie in der WO 84/04163 A als nächstkommender Stand der Technik aufgezeigt sind, bezeichnet man in der Fachsprache auch mit "Flüssigkeitsstandanzeigegeräte", wobei das Flüssigkeitsniveau durch ein elektrisches Schaltsignal kontrolliert wird. Bei diesen bekannten Vorrichtungen verläuft die Schalteinrichtung quer zur Verfahrrichtung des Schwimmerkörpers und ist endseitig unmittelbar von dem Gehäuse aufgenommen. Die Schalteinrichtung ist unabgedeckt von Teilen des Gehäuses unmittelbar dem Schwimmerkörper zugewandt und innerhalb des Fluids angeordnet. Das angesprochene Schaltsignal kann als Warnmeldung oder zur Niveauregulierung verwendet werden. Das Medium in Form des Fluids dringt dabei durch eine untere Anschlußbohrung in das Gerät ein und hebt im Gehäuse in Form eines Steigrohres einen Schwimmerkörper an. Der Schwimmerkörper hat nun das Niveau des Mediums im Behälter, an den die Vorrichtung angeschlossen ist. Sinkt das Niveau des Fluids wieder ab, so betätigt der Schwimmerkörper einen Schaltkontakt eines elektrischen Schaltkreises. In Abhängigkeit von dem gewünschten Schaltkreisverhalten kann der Schaltkontakt in der Art eines Schließers ausgebildet sein, bei dessen Betätigung ein Stromkreis geschlossen wird, oder in der Art eines Öffners, der dann den Stromkreis unterbricht. Eine weitere Variante besteht darin, den Schaltkontakt als Wechsler auszubilden, der dann sowohl als Schließer als auch als Öffner eingesetzt werden kann.

Sofern das Steigrohr durchsichtig ausgebildet ist, läßt sich über den dann sichtbaren Schwimmerkörper das jeweilige Flüssigkeitsniveau des Fluids oder Mediums optisch kontrollieren. Das dahingehend bekannte Flüssigkeitsstandanzeigegerät läßt sich auch mit einem Temperatursensor ausstatten, um derart die Temperatur des Fluids zu überwachen. Als Schaltkontakt und Teil der Schalteinrichtung dient meist ein Reedschalter, der in einem Querrohr aufgenommen ist, welches sich mit seinen Enden unter Durchgreifen des Gehäuses in Anlage mit diesem befindet. Die Dichtigkeit dabei an der Übergangsstelle zwischen dem Querrohr und dem Gehäuse ist bei extremen Temperaturschwankungen nicht gewährleistet. Die Anschlußkabel für den Reedschalter durchgreifen Silikonabdichtungen am Ende des Querrohres und sind mit Anschlußdrähten im endseitigen Anschlußstück des Gehäuses fest verbindbar. Diese bekannte Lösung ist aufwendig in der Konstruktion, so daß mithin ein hoher kostenintensiver Montageaufwand notwendig wird. Des weiteren sind aufgrund der angesprochenen Montagetechnik die einzelnen Baukomponenten fest miteinander verbunden, so daß ein Austausch von Komponenten gegen neue gleichfalls entsprechend aufwendig ist.

Zwar ist es durch die US 4,020,481 und die DE 83 10 280 U1 bekannt, bei einer vergleichbaren Vorrichtung zum Anzeigen und/oder Kontrollieren von Fluiden der eingangs genannten Art die elektrische Schalteinrichtung in Form eines Reedschalters innerhalb eines Anschlußteils zu integrieren, welches mit dem Gehäuse verbunden ist; allein bei diesen bekannten Anordnungen umfaßt das Anschlußteil vollständig die Schalteinrichtung, was das funktionssichere Schalten beim Passieren des Schwimmerkörpers beeinträchtigt. Ferner ist die Schalteinrichtung in Verfahrrichtung des Schwimmerkörpers gesehen parallel in dieser Verfahrrichtung angeordnet, was die bekannten Vorrichtungen konstruktiv groß aufbauen läßt. Ferner ist die Zugänglichkeit der Schalteinrichtung für Montage- und Wartungszwecke deutlich erschwert.

Durch die FR-A-2 254 016 ist ferner eine Vorrichtung zum Anzeigen und/oder Kontrollieren von Fluiden bekannt mit mindestens einem Fluidanschluß, der in das Innere eines Gehäuses mündet, in dem abhängig vom Fluidniveau ein Schwimmerkörper verfahrbar geführt ist, der eine elektrische Schalteinrichtung ansteuert, die Teil eines mit dem Gehäuse verbindbaren Anschlußteils ist, das die Schalteinrichtung derart aufnimmt, daß diese berührungsfrei innerhalb des Gehäuses geführt ist, wobei zwischen Schwimmerkörper und Anschlußteil die Schalteinrichtung quer zur Verfahrrichtung des Schwimmerkörpers in dem Fluid angeordnet ist, und wobei eines der Teile einen Aufnahmeraum für die Schalteinrichtung derart bildet, daß die Schalteinrichtung unabgedeckt von Teilen des Gehäuses und des Anschlußteils dem Schwimmerkörper zugewandt ist. Die bekannte Schalteinrichtung ist in der Art eines Reedschalters ausgebildet und dient im übrigen dazu, über eine Alarmglocke Meldung zu geben, sofern beispielsweise in einer Badewanne eine vorgebbare Wasserstandshöhe erreicht ist, um dergestalt ein ungewolltes Überlaufen der Badewanne aufgrund des einlaufenden Wassers zu vermeiden. Was die Funktionssicherheit für industrielle Anwendungen anbelangt, läßt die bekannte Lösung noch Wünsche offen. Ausgehend von diesem Stand der Technik liegt der Erfindung die Aufgabe zugrunde, die bekannten Vorrichtungen dahingehend weiter zu verbessern, daß der Montage- und Reparaturaufwand gering gehalten werden kann, daß auch bei extremen Temperaturschwankungen die Dichtigkeit der Vorrichtung gewährleistet ist und daß bei hoher Funktionssicherheit eine geringe Baugröße erreicht ist. Eine dahingehende Aufgabe löst eine Vorrichtung mit den Merkmalen des Anspruches 1 in seiner Gesamtheit.

Dadurch, daß gemäß dem kennzeichnenden Teil des Patentanspruches 1
- das Anschlußteil mehrteilig mit einem im Inneren des Gehäuses angeordneten oberen Teil und einem einem endseitigen Abschluß des Gehäuses zugeordneten unteren Teil ausgebildet ist, welcher außenumfangsseitig mit der O-Ring Dichtung versehen ist, und
- der obere Teil des Anschlußteils einen Aufnahmeraum für die Schalteinrichtung aufweist, der die Schalteinrichtung randseitig umfaßt und im Inneren des Gehäuses berührungsfrei zur Innenseite des Gehäuses angeordnet ist, wobei die Schalteinrichtung unabgedeckt von Teilen des Gehäuses und des Anschlußteils dem Schwimmerkörper zugewandt und zwischen dem Schwimmerkörper und dem Anschlußteil quer zur Verfahrrichtung des Schwimmerkörpers in dem Fluid angeordnet ist,
   erfolgt die Fluidführung in bauraumsparender Weise über das Anschlußteil selbst, was insoweit die Abdichtung zwischen dem Anschlußteil und dem Gehäuse erleichtert. Ferner ist insoweit eine vom Gehäuse separierbare Baugruppe gebildet, bestehend aus der Schalteinrichtung, insbesondere in Form des Reedschalters und dem mit dem Gehäuse verbindbaren Anschlußteil, das den zuordenbaren Fluidanschluß für das Innere des Gehäuses aufweist. Ferner ist die Schalteinrichtung über das Anschlußteil berührungsfrei innerhalb des Gehäuses geführt, so dass bei einem Teil der bekannten Lösungen das mit dem Gehäuse verbundene Querrohr für die Aufnahme des Reedschalters entfallen kann und mithin treten auch insoweit keine Abdichtprobleme mehr auf.

Dadurch, dass das Anschlußteil mehrteilig ist und dass das eine obere Teil des Anschlußteils einen Aufnahmeraum für die Schalteinrichtung derart bildet, dass dieser randseitig umfaßt ist, ist der modulare Aufbau der einzelnen Komponenten mit unterstützt, wobei die genannten Bauteile ohne weiteres lösbar miteinander verbunden sind, so dass ein Austausch defekter Komponenten gegen neue einfach möglich ist, was den Montage- und Reparaturaufwand reduzieren hilft.

Zwischen Schwimmerkörper und Anschlußteil ist die Schalteinrichtung quer zur Verfahrrichtung des Schwimmerkörpers in dem Fluid angeordnet, wobei die Schalteinrichtung unabgedeckt von Teilen des Gehäuses und des Anschlußteils dem Schwimmerkörper zugewandt ist, was die unmittelbare Einwirkung des Schwimmerkörpers auf die Schalteinrichtung, vorzugsweise in Form des Reedschalters, gewährleistet und den funktionssicheren Betrieb unterstützt.

Bei der erfindungsgemäßen Vorrichtung ist das Anschlußstück außenumfangsseitig mit einer Dichteinrichtung versehen, die in dichtender Anlage mit dem Gehäuse ist. Aufgrund der ohne weiteres demontierbaren Anordnung läßt sich mithin bei einem Verschleiß der Dichteinrichtung, insbesondere in Form eines O-Ringes, dieser gegen einen neuen austauschen und so die Dichtheit der Vorrichtung wieder herstellen.

Bei einer weiteren besonders bevorzugten Ausführungsform der erfindungsgemäßen Vorrichtung ist das mehrteilige Anschlußteil zweiteilig ausgebildet, was insbesondere beim Herstellen durch Spritzgießen des Anschlußteils den Herstellaufwand deutlich reduziert.

Bei einer weiteren besonders bevorzugten Ausführungsform der erfindungsgemäßen Vorrichtung ist das Anschlußteil auf seiner dem Gehäuse abgewandten Seite mit einer Steckerplatte versehen, die dem modularen Anschluß verschiedener Steckertypen an das Anschlußteil dient. Auf diese Art und Weise lassen sich verschiedenste Arten von Steckertypen mit der Vorrichtung für ihre spätere Anwendung koppeln.

Sofern hierbei vorzugsweise vorgesehen ist, daß in Richtung der Steckerplatte das Anschlußteil sich fußartig verbreitert, können auch Steckertypen mit vergrößerten Anschlußquerschnitten ohne Überstand an die Vorrichtung angeschlossen werden.

Im folgenden wird die erfindungsgemäße Vorrichtung anhand der Zeichnung näher erläutert.

Es zeigen in prinzipieller und nicht maßstäblicher Darstellung die
- Fig.1a und 1b: in Seitenansicht bzw. in Stirnansicht eine bekannte Vorrichtung;
- Fig.2 und 3: in Blickrichtung auf die Fig.1a und 1b gesehen, teilweise im Schnitt, teilweise in Ansicht dargestellt, in Stirn- bzw. in Seitenansicht den unteren Teil der be- kannten Vorrichtung;
- Fig.4 und 5: teilweise im Schnitt, teilweise in Ansicht dargestellt, die Stirn- bzw. Seitenansicht der erfindungsgemäßen Vorrichtung;
- Fig.6: in Draufsicht die Steckerplatte für die Vorrichtung nach den Fig.4 und 5;
- Fig. 7a,b,c: den Anschluß eines anderen Steckertyps an die Vorrichtung nach den Fig. 4 und 5.

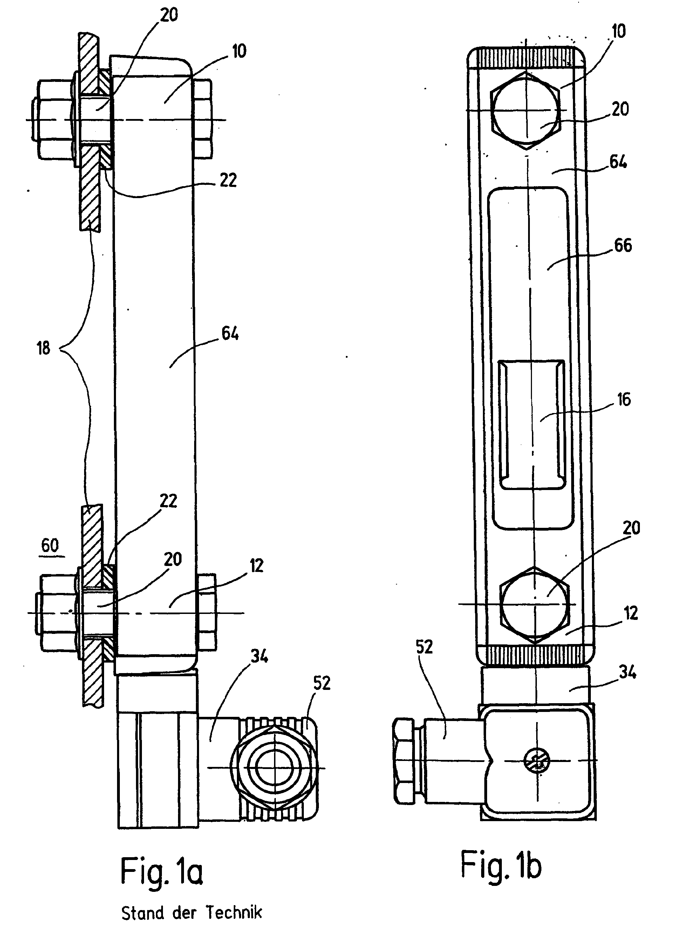

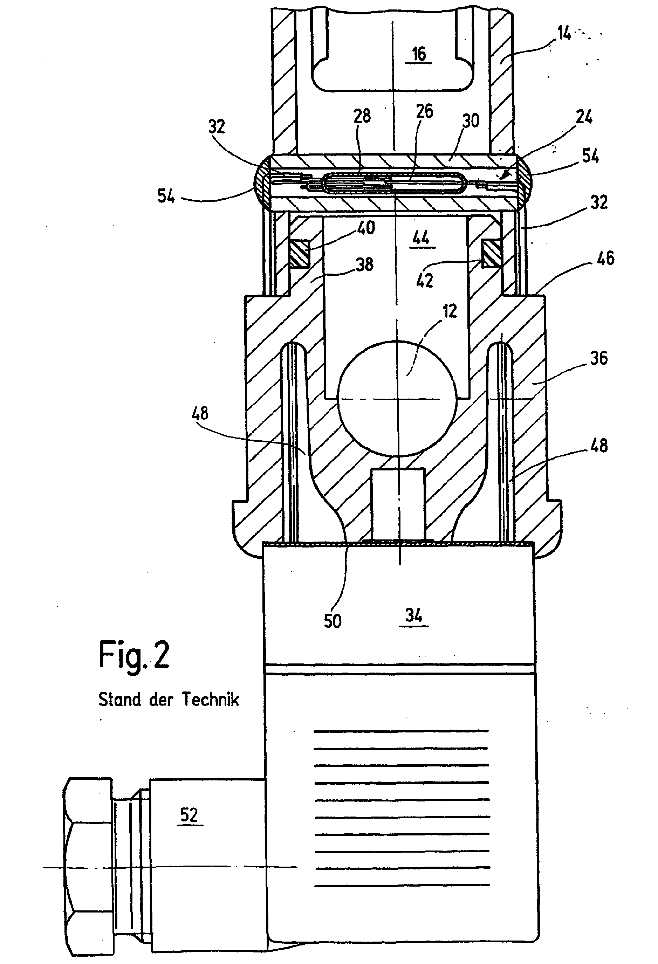

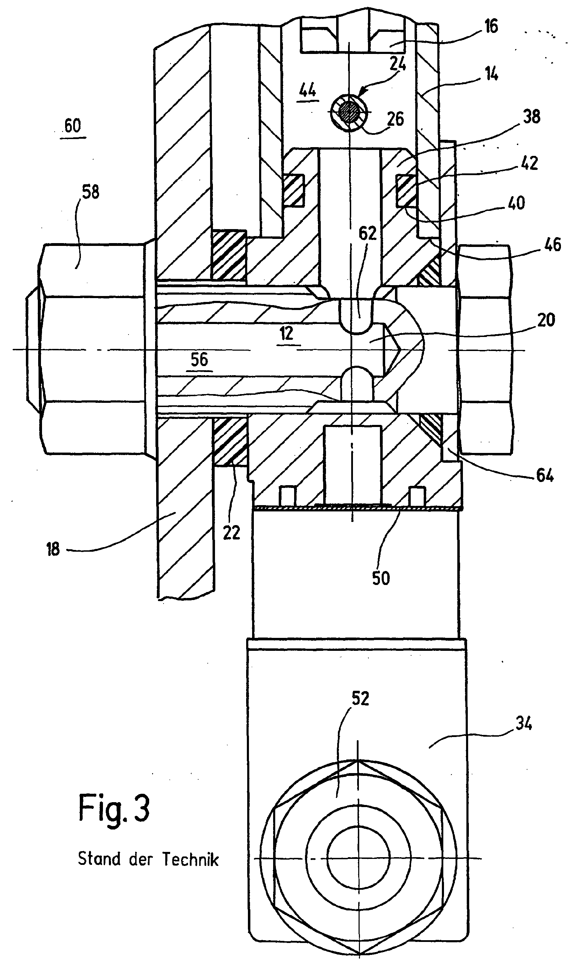

Zur Verdeutlichung der erfindungsgemäßen Unterschiede wird zunächst die bekannte Vorrichtung anhand der Fig.1 bis 3 näher vorgestellt. Die dahingehenden Zeichnungen sind auch mit dem Vermerk "Stand der Technik" versehen. Die bekannte Vorrichtung dient dem Anzeigen und/oder Kontrollieren von Fluiden. Hierfür kommen insbesondere Druckflüssigkeiten in Frage, wie Mineralöl nach DIN 51524, Teil1 und 2, Wasser-Öl-Emulsionen und synthetische Flüssigkeiten, wie Hydraulikflüssigkeiten auf Phosphat-Esterbasis. Die Vorrichtung weist zwei Fluidanschlüsse 10,12 auf, wobei in der Fig.3 der untere Fluidanschluß 12 im einzelnen dargestellt ist. Der in Blickrichtung auf die Figuren gesehen obere Fluidanschluß 10 ist vorteilhaft, um zu vermeiden, daß es unbeabsichtigt innerhalb des fluidführenden Gehäuses 14 zu einem Unterdruck oder Vakuum kommen kann, was die Längsverfahrbarkeit des Schwimmerkörpers 16 beeinträchtigen könnte. Der Schwimmerkörper 16 ist abhängig vom Fluidniveau (vgl. Fig.2) innerhalb des Gehäuses 10 längsverfahrbar geführt. Die in den Fig.1 bis 3 gezeigte Vorrichtung ist zum direkten Anbau an einen Druckflüssigkeitsbehälter, wie einen Tank, konzipiert, wobei in den Zeichnungen nicht der gesamte Behälter, sondern nur eine Behälterwand 18 der Einfachheit halber teilweise dargestellt ist. Die Befestigung der Vorrichtung an der Behälterwand 18 erfolgt mittels zweier Hohlschrauben 20. Des weiteren sind die beiden Hohlschrauben 20 über Behälterdichtungen 22 mit der Behälterwand 18 dichtend verbunden.

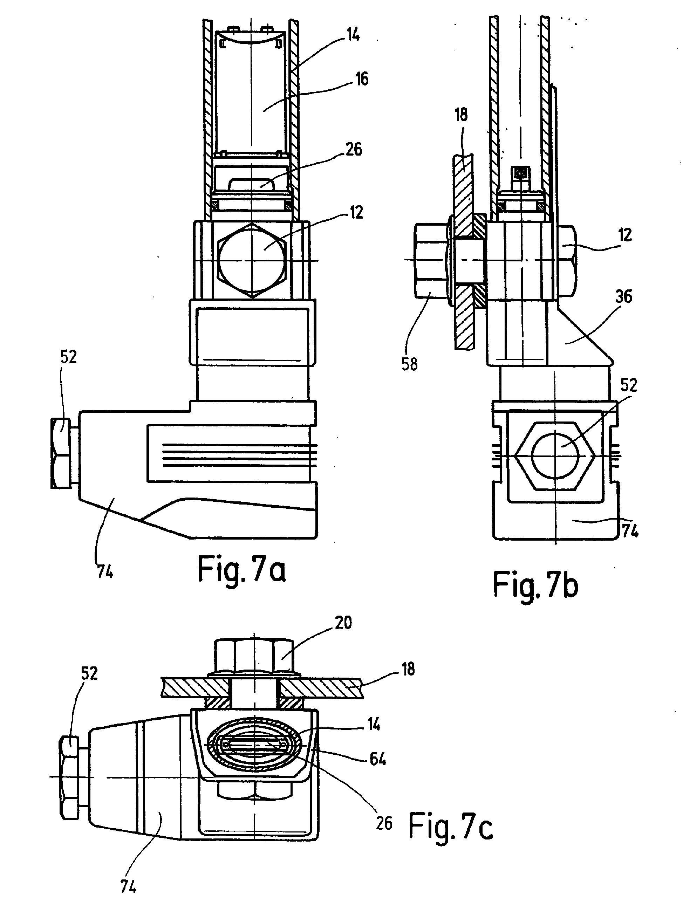

Des weiteren weist die bekannte Vorrichtung eine elektrische Schalteinrichtung 24 (Fig.2) auf mit einem Schaltkontakt in Form eines Reedschalters 26. Der dahingehende Reedschalter 26 ist von Magneten (nicht dargestellt) im Schwimmerkörper 16 ansteuerbar bzw. schaltbar. In Abhängigkeit der Ausbildung des Reedschalters 26 und mithin der Schalteinrichtung 24 kann dieser als Öffner, Schließer oder Wechsler eingesetzt werden. Neben einer Warnfunktion, beispielsweise bei einem ungewollten zu starken Absinken des Fluidniveaus, läßt sich das Schaltsignal auch zur Niveauregulierung einsetzen, beispielsweise indem die Schalteinrichtung 24 eine Nachfülleinrichtung (nicht dargestellt) für den Fluidbehälter ansteuert. Um mit der bekannten Flüssigkeitsstandanzeige auch eine Flüssigkeitsstandkontrolle zu erreichen, ist das Gehäuse 14 durchsichtig ausgeführt, insbesondere aus Plexiglas bestehend, mit vorzugsweise elliptischem Querschnitt (vgl. Fig.7c).

Wie insbesondere die Fig.3 zeigt, ist der Reedschalter 26 von einer Art Schrumpffolie 28 umfaßt in einem durchgehenden Längskanal eines Querrohres 30 geführt. Das Querrohr 30 durchgreift mit seinen beiden freien Enden die Wand des Gehäuses 14 und ist mit diesem endseitig beispielsweise über Schweißstellen (nicht näher dargestellt) fest verbunden. Der Reedschalter 26 ist über zwei Anschlußleitungen 32 mit einem Steckerteil 34, der einen bestimmten Steckertyp ausbildet, elektrisch verbunden, wobei das Anschlußteil 36 das Gehäuse 14 endseitig abschließt. Für diesen endseitigen Abschluß weist das Anschlußteil 36 einen im Durchmesser verringerten Anlagefortsatz 38 auf, der außenumfangsseitig zum Gehäuse 14 hin mit einer Innennut 40 versehen ist, die wiederum der Aufnahme eines Dichtringes 42 dient. Über den Dichtring 42 ist das Innere 44 des Gehäuses 14 zur Umgebung hin fluiddicht abgetrennt. Am Ende des Anlagefortsatzes 38 verbreitert sich dieser in einer Stufe und bildet eine ringartige Anlagefläche 46 aus, an der sich das freie Ende des Gehäuses 14 abstützen kann. Die Anschlußleitungen 32 selbst durchgreifen das Anschlußteil 36 und sind zum Steckerteil 34 hin in sich erweiternden Anschlußkanälen 48 geführt. Des weiteren ist das Steckerteil 34 über eine Steckerplatte 50 an das Anschlußteil 36 elektrisch und mechanisch angeschlossen. Das Steckerteil 34 weist ein im rechten Winkel abgekröpftes Anschlußstück 52 auf, über das die Fluidstandsanzeige oder Fluidstandskontrolle an andere Einrichtungen, wie Steuer- und Niveaureguliereinrichtungen (nicht dargestellt), anschließbar ist.

Das mit dem einen Ende des Gehäuses 14 fest verbundene Querrohr 30 ragt mit den freien Enden seines Längskanals in die Umgebung und ist gegenüber dieser mittels zweier Silikondichtkappen 54 abgeschlossen. Das Innere 44 des Gehäuses 14 ist über die beiden Fluidanschlüsse 10,12, wie dies insbesondere in der Fig. 3 für den unteren Fluidanschluß 12 dargestellt ist, mit dem Behälterinneren fluidführend verbunden. Hierzu weist der jeweilige Fluidanschluß 10,12 eine Längsbohrung 56 auf, die über eine Schraubenmutteranschlußstelle 58 ins Innere 60 des Behälters mündet. Zum Anschlußteil 36 hin mündet die Längsbohrung 56 in eine Querbohrung 62, die wiederum fluidführend in das Innere 44 des Gehäuses 14 mündet. Wie des weiteren die Fig.3 zeigt, stört die Schalteinrichtung 24 den dahingehenden Fluidfluß nicht, sondern vielmehr kann an der Schalteinrichtung 24 vorbei das Fluid über die genannten Fluidanschlüsse 10,12 auf den Schwimmerkörper 16 unmittelbar einwirken, der in Abhängigkeit von dem Fluidniveau im Behälter den dahingehenden Fluidstand anzeigt.

Vergleichbar dem unteren Fluidanschluß 12 ist auch der obere Fluidanschluß 10 über eine Schraubenmutterverbindung (vgl. Fig.1a,1b) erreicht, wobei über die dahingehenden Schraubenmutterverbindungen eine Gehäuseabdeckung 64 vorzugsweise aus Aluminiummaterial festgelegt ist. Die dahingehende Gehäuseabdeckung 64 weist ein Schaufenster 66 auf, unter dem das Plexiglasgehäuse 14 in Erscheinung tritt und die Position des Schwimmerkörpers 16 niveaubedingt einem Betrachter anzeigt. Über die Gehäuseabdeckung 64 werden auch die beiden Anschlußteile 36 aneinandergehalten und mithin die Lage des Gehäuses 14 zwischen den Anschlußteilen 36 definiert.

Die bekannte Lösung gemäß den Fig.1 bis 3 ist durch eine große Einzelteilanzahl charakterisiert. Hierdurch entstehen auch ein hoher Montageaufwand und eine aufwendige Konstruktion. Es hat sich gezeigt, daß die Dichtigkeit an der Verbindungsstelle, insbesondere Schweißstelle, zwischen dem Sichtrohr in Form des Gehäuses 14 und dem Querrohr 30 insbesondere bei extremen Temperaturschwankungen nicht gewährleistet ist. Der angesprochene Dichtring 42 in Form eines üblichen O-Ringes läßt sich aufgrund der Konstruktion bei Verschleiß nicht ohne weiteres austauschen. Vielmehr ist dann die gesamte Vorrichtung unter Durchtrennen der Anschlußleitungen 32 auseinanderzubauen, was zu einem erhöhten Reparaturaufwand führt. Aufgrund der Ausgestaltung des unteren Anschlußteils 36 sowie der angesprochenen Steckerplatte 50 ist immer nur der Anbau und Einsatz eines speziell für die Vorrichtung vorgesehenen Steckerteils 34 möglich, so daß insoweit eine Baukastenlösung für unterschiedliche Steckertypen nicht realisierbar ist.

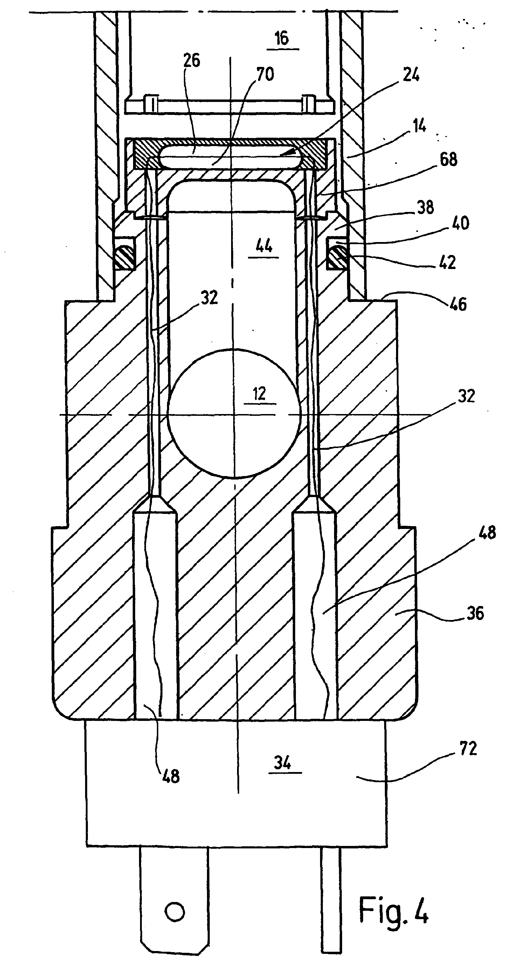

Ausgehend von der bekannten Lösung nach den Fig. 1 bis 3 wird nunmehr die erfindungsgemäße Vorrichtung anhand der Fig. 4ff näher beschrieben, wobei die bisherigen Bauteile sowie die dahingehend verwendeten Bezugszeichen auch für die erfindungsgemäße Lösung bei ihrer Beschreibung eingesetzt werden und diese im übrigen insofern nur noch beschrieben wird, als sie sich wesentlich von der bekannten Lösung unterscheidet.

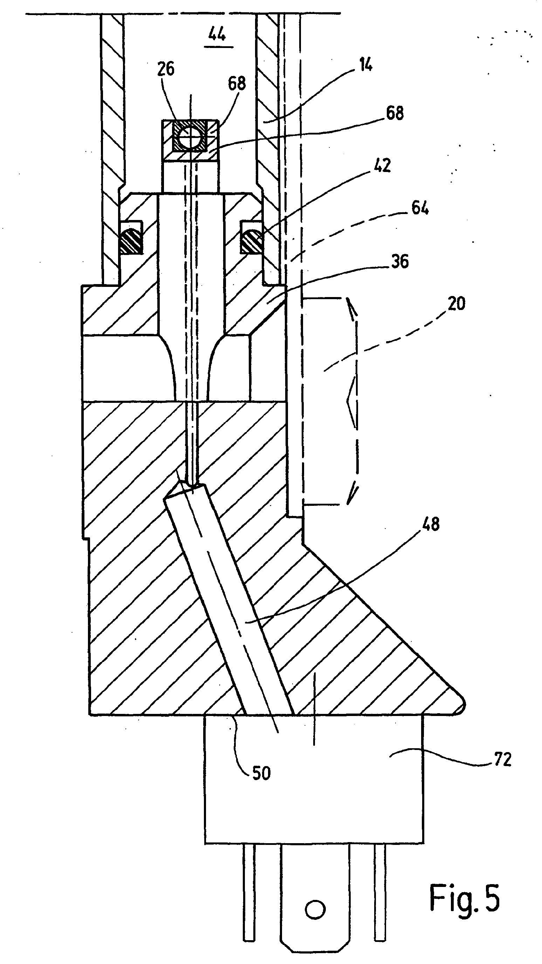

Wie die Fig.4 und 5 zeigen, ist die elektrische Schalteinrichtung 24 Teil des mit dem Gehäuse 14 verbindbaren Anschlußteils 36, das die Schalteinrichtung 24, insbesondere den Reedschalter 26, derart aufnimmt, daß dieser berührungsfrei innerhalb des Gehäuses 14 geführt ist. Die elektrische Schalteinrichtung 24 mit dem Reedschalter 26 wirkt wiederum mit mindestens einem Magneten (nicht dargestellt) im Schwimmerkörper 16 zusammen und die Anschlußleitungen 32 für den Reedschalter 26 sind diesmal ausschließlich im Anschlußteil 36 geführt. Das Anschlußteil 36 ist wiederum außenumfangsseitig mit der Dichteinrichtung in Form der O-RingDichtung 42 versehen, die in dichtender Anlage mit der Innenseite des Gehäuses 14 ist. Wie die Fig. 4 des weiteren zeigt, ist das Anschlußteil 36 zweiteilig ausgebildet, wobei das eine obere Teil 68 einen Aufnahmeraum 70 für die Schalteinrichtung 24, insbesondere den Reedschalter 26, derart bildet, daß die Schalteinrichtung 24 unabgedeckt dem Schwimmerkörper 16 zugewandt ist. Es ist mithin eine Baugruppe gebildet worden zwischen dem Anschlußteil 36 und dem Reedschaltergehäuse in Form des oberen Teils 68 des Anschlußteils 36. Dadurch liegt der Reedschalter 26, randseitig von dem oberen Teil 68 des Anschlußteils 36 umfaßt, im Inneren des Plexiglassichtrohres in Form des Gehäuses 14. Die dahingehende Anordnung ist, wie dies insbesondere die Fig.4 zeigt, berührungsfrei zu der Innenseite des Gehäuses 14. Der bekannte Schrumpfschlauch 28 zum Schutz des Reedschalters 26 und die Silikondichtkappen 54 zum Abdichten des Querrohres 30 sind somit entfallen. Durch den dahingehenden Aufbau läßt sich die Vorrichtung in kurzer Zeit vollständig montieren und demontieren. Vorzugsweise ist das Material des Anschlußteils 36 und das des Reedschaltergehäuses in Form des oberen Teils 68 aus dem gleichen Kunststoffmaterial gebildet. Damit sind die Längen-Ausdehnungs-Koeffizienten gleich, wobei durch das Verbinden von oberem Teil 68 zu unterem Anschlußteil 36 über Ultraschall-Schweißen eine unlösbare, homogene Verbindung entsteht. Somit können auch bei extremen Temperaturen oder Temperaturschwankungen keine Undichtigkeiten entstehen. Der Reedschalter 26 selbst ist von oben komplett im Epoxydharz eingegossen. Die Kunststoffteile lassen sich ohne weiteres über ein Spritzgießverfahren od.dgl. herstellen und anschließend über ein Ultraschall-Schweißverfahren miteinander verbinden. Das Anschlußteil 36 und der obere Teil 68 lassen sich jedoch technisch auch einstückig herstellen, beispielsweise mit einem Wachsausschmelzverfahren. Das letztgenannte Herstellungsverfahren ist jedoch teuer, so daß die vorgestellte zweiteilige Lösung die Herstellkosten reduziert. Neben den angesprochenen Kunststoffmaterialien lassen sich die Anschlußteile 36 sowie die oberen Teile 68 auch mit anderen Werkstoffen realisieren.

Des weiteren ist nunmehr problemlos ein Austausch des Dichtringes 42 möglich, der ein Verschleißteil darstellt, ohne daß, wie bei der bekannten Lösung, die gesamte Baueinheit (Anschlußteil 36, Reedschalter 26) zerlegt werden muß. Durch Entfernen des unteren Anschlußteils 36 läßt sich die gesamte Baueinheit vom Gehäuse 14 abziehen und der Austausch der Dichtung 42 vornehmen. Für das dahingehende Zerlegen der erfindungsgemäßen Vorrichtung sind nur die Hohlschrauben 20 von der Behälterwand 18 zu lösen, wodurch die Freigabe von unterem und oberem Anschlußteil 36 nebst Gehäuse 14 erreicht ist.

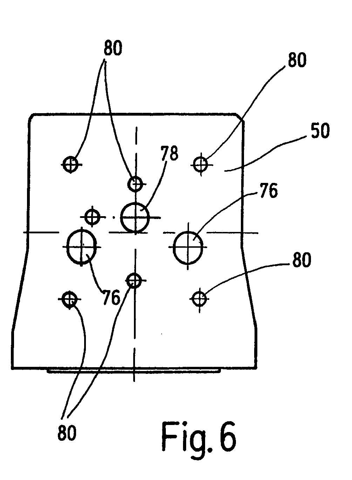

Die Anschlußflächen der einzelnen Steckerteile 34 über die Steckerplatte 50 (vgl. Fig.6) sind derart ausgeführt, daß sowohl ein Standard-Steckerteil 72, wie es in den Fig.4 und 5 dargestellt ist, als auch ein modifiziertes Stekkerteil 74, wie es Gegenstand der Fig.7a, 7b und 7c ist, anschließbar ist. Für den Anschluß der verschiedenen Steckerteile 34 dient die vorbereitete Steckerplatte 50 gemäß der Fig.6, die sich an die Unterseite des unteren Anschlußteils 36 anschließt. Die Steckerplatte 50 weist hierfür zwei Bohrungen 76 mit elliptischem Austrittsquerschnitt auf, in die die freien Enden der beiden Anschlußkanäle 48 münden. Des weiteren ist eine Zentralbohrung 78 vorgesehen, die dem Eingriff einer Erdungsschraube (nicht dargestellt) dienen kann. Die weiteren Bohrungen 80 dienen gleichfalls dem Eingriff von Befestigungs- oder Erdungsschrauben (nicht dargestellt). Die vorbereiteten Bohrungslöcher für die Befestigungsschrauben und die Erdungsschrauben werden je nach Steckerteil 34 und mithin je nach Steckertyp nur teilweise genutzt. So hat im vorliegenden Fall die mittig angeordnete Erdungsbohrung 78 keine Funktion, da nur Kunststoffteile für das Anschlußteil 36 Verwendung finden und im übrigen die Spannung für die Vorrichtung reduziert ist, beispielsweise unter 50 Volt bleibt. Da es aber Steckerteile 34 gibt mit nur einer Befestigungsschraube und nur eine Erdungsschraube, dient die Erdungsschraube für die mittige Zentralbohrung 78 nicht nur zum Befestigen, sondern auch als Verdrehsicherung für das Steckerteil 34.

Um einen modifizierten Steckertyp 74 anschließen zu können mit einem verbreiterten Anschlußquerschnitt, wie der in den Fig. 7a,7b und 7c in verschiedenen Ansichten dargestellt ist, ist das untere Anschlußteil 36 zu seinem freien Ende hin in der Art eines Fußes im Querschnitt verbreitert, so daß ohne Rand-überstand der modifizierte Steckerteil 74 an die Unterseite des Anschlußteils 36 angeschlossen werden kann. Um den dahingehenden Anschluß zu erreichen, ist darüber hinaus vorgesehen, daß zum freien Ende des Anschlußteils 36 hin die Anschlußkanäle 48 sich zum einen im Durchmesser erweitern, im übrigen aber zur Fußspitze des Anschlußteils 36 hin eine Neigung aufweisen. Sowohl für den Standard-Steckerteil 72 als auch für den modifizierten Steckerteil 74 sind Kernbohrungen (nicht dargestellt) im Anschlußteil 36 vorbereitet. Die entsprechend einzusetzenden Schrauben (nicht dargestellt) pressen dann das Gewinde bei der Montage in die Vorrichtung, so daß die sonst nötigen Anbauwinkel, Winkeldichtungen und Metall-einlegemuttem der bisherigen Konstruktion entfallen können.

Mit der erfindungsgemäßen Vorrichtung ist eine modular aufbauende Bausatzlösung für verschiedenste Steckerteile 34 verwirklicht, die darüber hinaus montage- und reparaturfreundlich ist.

## Patentansprüche

1. Vorrichtung zum Anzeigen und/oder Kontrollieren von Fluiden, umfassend:
- ein Gehäuse (14);
- mindestens ein mit dem Gehäuse (14) lösbar verbundenes Anschlußteil (36);
- mindestens einen ins Innere (44) des Gehäuses (14) mündenden Fluidanschluß (10,12);
- wobei das Innere (44) des Gehäuses (14) mit dem jeweils zuordenbaren Fluidanschluß (12) über das jeweilige Anschlußteil (36) fluidführend in Verbindung steht,
- wobei das Anschlußteil (36) außenumfangsseitig mit einer O-Ring Dichtung (42) versehen ist, die in dichtender Anlage mit dem Gehäuse (14) ist,
- einen abhängig vom Fluidniveau im Inneren (44) des Gehäuses (14) verfahrbar geführten Schwimmerkörper (16);
- eine durch den Schwimmerkörper (16) ansteuerbare elektrische
Schalteinrichtung (24);
**dadurch gekennzeichnet,**
- **dass** das Anschlußteil (36) mehrteilig mit einem im Inneren (44) des Gehäuses (14) angeordneten oberen Teil (68) und einem einem endseitigen Abschluß des Gehäuses (14) zugeordneten unteren Teil (38) ausgebildet ist, welcher außenumfangsseitig mit der O-Ring Dichtung (42) versehen ist, und
- **dass** der obere Teil (68) des Anschlußteils (36) einen Aufnahmeraum (70) für die Schalteinrichtung (24) aufweist, der die Schalteinrichtung (24) randseitig umfaßt und im Inneren des Gehäuses (14) berührungsfrei zur Innenseite des Gehäuses (14) angeordnet ist, wobei die Schalteinrichtung (24) unabgedeckt von Teilen des Gehäuses (14) und des Anschlußteils (36) dem Schwimmerkörper (16) zugewandt und zwischen dem Schwimmerkörper (16) und dem Anschlußteil (36) quer zur Verfahrrichtung des Schwimmerkörpers (16) in dem Fluid angeordnet ist.

2. Vorrichtung nach Anspruch 1, **dadurch gekennzeichnet, daß** die elektrische Schalteinrichtung (24) einen Reedschalter (26) aufweist, der mit mindestens einem Magneten im Schwimmerkörper (16) zusammenwirkt und die Anschlußleitungen (32) für den Reedschalter (26) ausschließlich im Anschlußteil (36) geführt sind.

3. Vorrichtung nach Anspruch 1 oder 2, **dadurch gekennzeichnet, daß** das Gehäuse (14) zumindest teilweise längs des möglichen Verfahrweges des Schwimmerkörpers (16) über ein Schaufenster (66) durchsichtig gehalten ist.

4. Vorrichtung nach einem der Ansprüche 1 bis 3, **dadurch gekennzeichnet, daß** das Anschlußteil (36) auf seiner dem Gehäuse (14) abgewandten Seite mit einer Steckerplatte (50) versehen ist, die dem modularen Anschluß verschiedener Steckerteile (34) an das eine Anschlußteil (36) dient.

5. Vorrichtung nach Anspruch 4, **dadurch gekennzeichnet, daß** in Richtung der Steckerplatte (50) das Anschlußteil (36) sich fußartig verbreitert, um Steckerteile (34) mit vergrößerten Anschlußquerschnitten anzuschlieβen.

6. Vorrichtung nach einem der Ansprüche 1 bis 5, **dadurch gekennzeichnet, daß** das Gehäuse (14) zwischen dem einen Anschlußteil (36) und einem weiteren Anschlußteil (36) festlegbar ist und daß die Anschlußteile (36) mit einer Behälterwand (18) fest verbindbar sind und eine Gehäuseabdeckung (64) zwischen sich festlegen.

7. Vorrichtung nach Anspruch 6, **dadurch gekennzeichnet, daß** das Gehäuse (14) einen ovalen Querschnitt und die Gehäuseabdeckung (64) einen im wesentlichen rechteckförmigen Querschnitt aufweisen.

## Claims

1. An device for displaying and/or controlling fluids, comprising:
- a housing (14);
- at least one connection part (36) releaseably connected to the housing (14);
- at least one fluid connection (10, 12) opening out into the interior (44) of the housing (14);
- the interior (44) of the housing (14) being connected, such as to convey fluid, to the respectively assignable fluid connection (12) by means of the respective connection part (36),
- the connection part (36) being provided on the outer circumference with an O ring seal (42) which is in contact, such as to form a seal, with the housing (14),
- a float (16) guided displaceably depending on the fluid level in the interior (44) of the housing (14);
- an electric switching device (24) controllable by the float (16); **characterised in that**
- the connection part (36) is formed with a number of parts comprising an upper part (68) disposed in the interior (44) of the housing (14) and a lower part (38) assigned to an end closure of the housing (14) and which is provided on its outer circumference with the O ring seal (42), and
- that the upper part (68) of the connection part (36) has a receiving space (70) for the switching device (24) which surrounds the switching device (24) on the edge and within the housing (14) is arranged without any contact with the inside of the housing (14), the switching device (24) facing towards the float (16), not covered by any parts of the housing (14) and the connection part (36), and being disposed between the float (16) and the connection part (36) transversely to the direction of displacement of the float (16) in the fluid.

2. The device according to Claim 1, **characterised in that** the electric switching device (24) has a reed switch (26) which co-operates with at least one magnet in the float (16), and the connection lines (32) for the reed switch (26) are guided exclusively in the connection part (36).

3. The device according to Claim 1 or 2, **characterised in that** the housing (14) is kept transparent at least partially along the possible path of displacement of the float (16) by means of a display window (66).

4. The device according to any of Claims 1 to 3, **characterised in that** the connection part (36) is provided on its side facing away from the housing (14) with a plug board (50) which is used for the modular connection of different plug parts (34) to the one connection part (36).

5. The device according to Claim 4, **characterised in that** the connection part (36) widens like a foot towards the plug board (50) in order to connect plug parts (34) with enlarged connection cross-sections.

6. The device according to any of Claims 1 to 5, **characterised in that** the housing (14) can be fixed between the one connection part (36) and a further connection part (36), and that the connection parts (36) can be connected securely to a container wall and fix a housing covering (64) between them.

7. The device according to Claim 6, **characterised in that** the housing (14) has an oval cross-section and the housing cover (64) a substantially rectangular cross-section.

## Revendications

1. Dispositif d'indication et/ou de contrôle de fluides, comprenant :
- un boîtier (14) ;
- au moins une partie (36) formant raccord et reliée d'une manière amovible au boîtier (14) ;
- au moins un raccord (10, 12) pour un fluide débouchant à l'intérieur (44) du boîtier (14) ;
- dans lequel l'intérieur (44) du boîtier (14) est en communication fluidique, par la partie (36) respective de raccord, avec le raccord (12) pour un fluide pouvant être associé respectivement,
- dans lequel la partie (36) de raccord est pourvue, du côté de la périphérie extérieure, d'un joint (42) torique qui est en contact d'étanchéité avec le boîtier (14),
- un flotteur (16) guidé de manière à pouvoir se déplacer à l'intérieur (44) du boîtier (14) en fonction du niveau du fluide ;
- un dispositif (24) de commutation électrique pouvant être
commandé par le flotteur (16) ;
**caractérisé,**
- **en ce que** la partie (36) de raccord est constituée en plusieurs parties, en ayant une partie (68) supérieure disposée à l'intérieur (44) du boîtier (14) et une partie inférieure associée à une fermeture du côté de l'extrémité du boîtier (14), partie (38) inférieure qui est pourvue du joint (42) torique du côté du pourtour extérieur, et
- **en ce que** la partie (68) supérieure de la partie (36) de raccord comporte un espace (70) de logement du dispositif (24) de commutation qui entoure, du côté du bord, le dispositif (24) de commutation et qui est disposé à l'intérieur du boîtier (14) sans contact avec la face intérieure du boîtier (14), le dispositif (24) de commutation n'étant pas recouvert de parties du boîtier (14) et la partie (36) de raccord, étant tourné du côté du flotteur (16) et étant disposé dans le fluide transversalement à la direction de déplacement du flotteur (16) entre le flotteur (16) et la partie (36) de raccord.

2. Dispositif suivant la revendication 1, **caractérisé en ce que** le dispositif (24) de commutation électrique comporte un interrupteur (26) Reed qui coopère avec au moins un aimant dans le flotteur (16) et les lignes (32) de connexion de l'interrupteur (26) Reed passent exclusivement dans la partie (36) de raccord.

3. Dispositif suivant la revendication 1 ou 2, **caractérisé en ce que** le boîtier (14) est maintenu avec transparence par un hublot (66) au moins en partie le long du trajet de déplacement possible du flotteur (16).

4. Dispositif suivant l'une des revendications 1 à 3, **caractérisé en ce que** la partie (36) de raccord est pourvue, sur son côté éloigné du boîtier (14), d'une plaque (50) de connecteur qui sert à la connexion modulaire de diverses parties (34) de connecteur à la partie (36) de raccord.

5. Dispositif suivant la revendication 4, **caractérisé en ce que** la partie (36) de raccord s'élargit à la manière d'un pied dans la direction de la plaque (50) de connecteur, pour raccorder des parties (34) de connecteur de sections transversales de connexion agrandies.

6. Dispositif suivant l'une des revendications 1 à 5, **caractérisé en ce que** le boîtier (14) peut être fixé entre la ou une partie (36) de raccord et une autre partie (36) de raccord, et **en ce que** les parties (36) de raccord peuvent être reliées de manière fixe à une paroi (18) de récipient et fixent entre elles un recouvrement (64) du boîtier.

7. Dispositif suivant la revendication 6, **caractérisé en ce que** le boîtier (14) à une section transversale ovale et le recouvrement (64) du boîtier a une section transversale sensiblement rectangulaire.
